# EUROPEAN PATENT APPLICATION

(11) **EP 1 274 017 A1**
(43) Date of publication of application: **08.01.2003**
(21) Application number: 00307230.3
(22) Date of filing: 22.08.2000
(51) Int. Cl.: G06F 17/30

(54) **Electronic document delivery**

(71) Applicant: Gavoa Ltd, London W140QH (GB)
(72) Inventor: The designation of the inventor has not yet been filed

(57) **Abstract**

A user agent (6) has access to the file system (11) of a computer (1, 2) via an interface provided by a WAP server (12) running on the computer (1, 2). The WAP server (12) has CGI scripts (13) which enable the user to email files from the computer (1, 2) and to print files from the computer (1, 2) at another, remote computer (3).

## Description

The present invention relates to a method of delivering an electronic document and to a method of establishing an HTTP connection between two apparatuses.

Recently WAP (Wireless Application Protocol) has been taken up by manufacturers of mobile phones and other portable communication devices to provide Internet services to such devices over relatively low bandwidth channels, typically 9.6kbits s⁻¹ for GSM mobile phones. Small portable devices presently have insufficient memory to store large numbers of complex documents.

The FTP (File Transfer Protocol) is well-known and can be used to perform file management, e.g. renaming, copying, etc., on a remote computer. However, FTP is essentially a private interaction between a client and a server and does not provide for transfer of files other than between the FTP client and the FTP server.

According to the present invention, there is provided a method of delivering an electronic document, the method comprising:-
receiving a document identification signal from a remote client at a stateless server process of a server;
receiving a document destination signal from the remote client at the server process;
receiving a document dispatch command signal from the remote client at the server process;
dispatching the document, identified by the document identification signal, from the server to the destination, identified by the document destination signal, in response to reception of the document dispatch command signal,
wherein the destination is neither said server nor said remote client.

The statelessness of the server process distinguishes the present invention from, for example, the case of a telnet session being used to send an email from a remote computer. A web server is an example of a stateless server.

Preferably, said signals comprise HTTP requests. However, they may be signals according to a protocol specific to the actions specified.

Conveniently, the requests are received from a channel using, at least in part, WSP/B (Wireless Session Protocol/Browsing).

Preferably, the document identification signal comprises an HTTP request identifying a CGI program. More preferably, a method according to the present invention includes running said CGI program to generate a hypermedia document including a form to enable a recipient to select from a plurality of file handling processes. Still more preferably, said file handling processes include printing and/or emailing.

Preferably, the destination identification signal comprises an HTTP request identifying a CGI program. More preferably, the destination identification signal also serves as said document dispatch command signal. Still more preferably, a method according to the present invention includes running said CGI program to send an email to the destination, identified by said destination identification signal, with said electronic document as an attachment.

Alternatively or additionally, the method may include receiving a printer id from said destination and generating, at said server, a hypermedia document, including a list of printers which contains said id, and dispatching said document to the destination. In this case, said destination identification signal preferably comprises an HTTP request identifying a CGI program corresponding to a hyperlink in said hypermedia document. More preferably, a method according to the present invention includes receiving a request for a hypermedia document from the destination at the server process, said document having an applet embedded therein and serving said hypermedia to the destination, wherein the applet comprises computer instructions for enabling a computer, on which the applet is running, to send said printer id to the server, receive said electronic document and print out said document using a printer identified to the server by said id.

According to the present invention, there is also provided a method of establishing HTTP communication between a first apparatus and a second apparatus, wherein the second apparatus is dynamically allocated its IP address, the method comprising:-
receiving notification of the IP address of the second device at a third apparatus;
storing the notified IP address in association with an id indicative of the second apparatus at the third apparatus;
receiving an HTTP request from an HTTP client at the first apparatus at the third apparatus, the HTTP request including a URI containing an element indicative of the second apparatus; and
responding to said request in dependence on said element to obtain the stored IP address of the second apparatus and send a response, including said IP address, to the first apparatus, said response being configured to cause said HTTP client to send a request to the second apparatus without performing a DNS (Domain Name Service) lookup.

Preferably, said response is a 301 or 302 response as defined in RFC 1945 or RFC 2616.

According to the present invention, there is provided an apparatus, for example a computer, configured to perform a method according to the present invention.

An embodiment of the present invention will now be described, by way of example, with reference to the accompanying drawings, in which:-
Figure 1 illustrates the main components of a system embodying the present invention;
Figure 2 is a data flow diagram of the first home system of Figure 1;
Figure 3 is a data flow diagram of the second home system of Figure 1;
Figure 4 is a data flow diagram of the web server of Figure 1;
Figure 5 is a signalling diagram illustrating the establishment of communication between a user agent and a home system;
Figure 6 illustrates a collection of WML card decks;
Figure 7 is a signalling diagram illustrating signalling between the remote system, the web server and the first home system of Figure 1; and
Figure 8 illustrates the user interface of an applet.

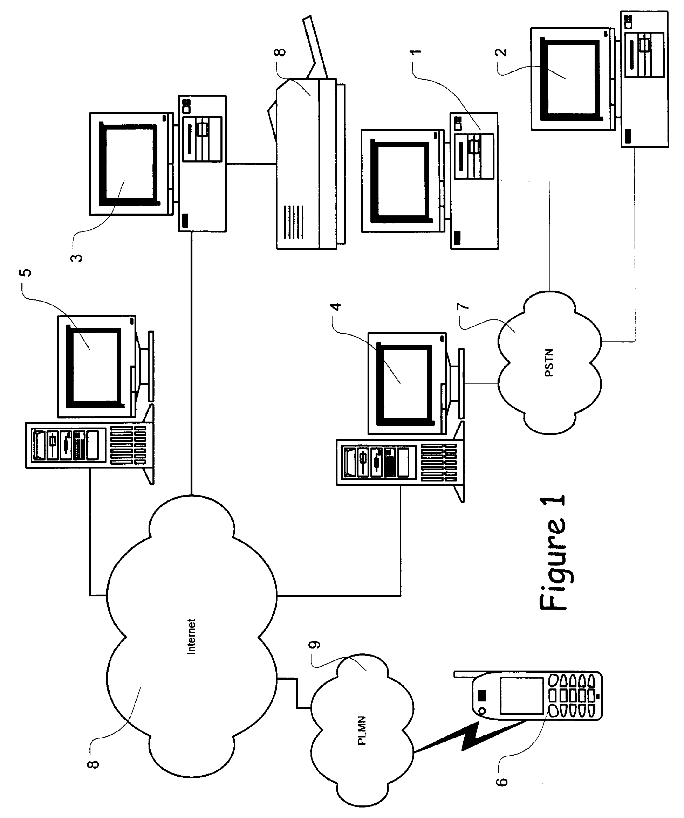

Referring to Figure 1, a system embodying the present invention comprises a first home system 1, a second home system 2, a remote system 3, ISP (Internet Service Provider) server system 4, a web server system 5 and a WAP (Wireless Application Protocol) user agent 6, in this case a WAP-enabled mobile phone provided with a microbrowser for browsing WML (Wireless Mark up Language) documents. The first and second home system 1 can establish PPP (point-to-point protocol) connections to the ISP server system 4 via the public switched telephone network 7. The remote system 3, the ISP server system 4 and the web server system 5 are interconnected by the Internet 8, which may include another ISP server system which the remote system 3 can dial into for Internet access. The user agent 6 has access to the Internet 8 via a mobile phone network 9. The remote system 3 is connected to a printer 10 via a parallel cable or a local area network.

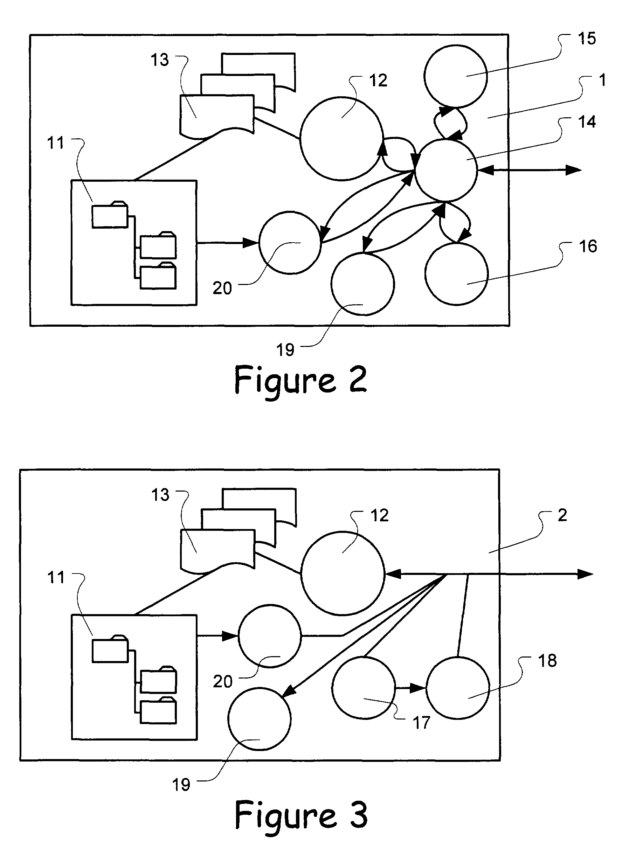

Referring to Figure 2, the first home system 1 comprises a conventional personal computer running a Microsoft Windows operating system. The first home system 1 has a file system 11, a WAP server 12, implemented in Java, a collection of CGI scripts 13, WinSock 14, a PPP (point-to-point protocol) dial-up process 15 and a WinSock monitoring process 16. Additionally, there is a printer id receiving process 19 and a file transfer process 20.

Referring to Figure 3, the second home system 2 comprises a conventional personal computer running a UNIX-type operating system such as Linux or FreeBSD. The second home system 2 has a file system 11, a WAP server 12 which is the same as that in the first home system 2, a collection of CGI scripts 13 and a PPP daemon 17. The PPP daemon is a modified version of the conventional pppd program, found on Linux computers, which spawns an IP address reporting client process 18 when a PPP connection to a remote computer has been established. Additionally, there is a printer id receiving process 19 and a file transfer process 20.

In both cases, the CGI scripts 13 enable the WAP server 12 to provide a set of file management functions to the user agent[SLG1]. The WAP server 12 is not restricted to serving WML documents and can also server HTML documents. The term "WAP server" identifies that process's main but not sole function.

The operation of the home systems 1a, 1b will become apparent from the description of the operation of the whole system given below.

The remote system is a conventional personal computer running a Microsoft Windows operating system, e.g. Windows NT or Windows 98, and provided with the Microsoft JVM (Java Virtual Machine), a web browser and office software such as a word processor and a spreadsheet.

The ISP server system 4 is entirely conventional and, therefore, will not be described in detail here.

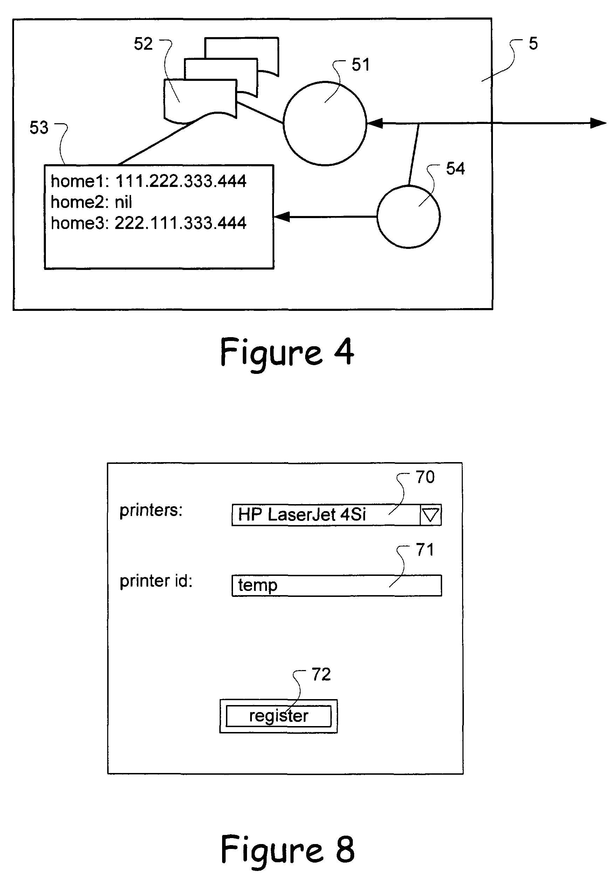

Referring to Figure 4, the web server system 5 comprises a powerful computer. The web server system 5 has a web server program 51, such as Apache, a plurality of CGI scripts 52 which are available to the web server program 51, a user-to-IP address mapping hash table 53 ("the IP table") and an IP address reporting server process 54.

The operation of the web server system 5 will become apparent from the description of the operation of the system as a whole given below.

The operation of the system shown in Figure 1 will now be described.

Referring to Figures 1 and 2, when the first home system 1 connects to the Internet 8, the dial-up process 15 establishes a PPP connection to the ISP server system 4 in the conventional manner. During connection, the ISP server system 4 dynamically allocates an IP address for the first home system's Internet interface and transmits it to the first home system 1, where it is stored.

The WinSock monitoring process 16 monitors messages generated by the WinSock 14 until it detects one which indicates that a PPP connection has been established. When such a message is detected, the WinSock monitoring process 16 attempts to connect to a TCP/IP port on the web server system 5 which is associated with the IP address reporting server process 55. Once the connection is established, there is an exchange of messages in which the first home system 1 and the web server system 5 confirm their identities to each other and the WinSock monitoring process 16 sends the IP address, allocated to the first home system 1 by the ISP server system 4, to the IP address reporting server process 55. The connection is then closed.

Referring to Figures 1 and 3, when the second home system 2 connects to the Internet 8, the dial-up process 15 establishes a PPP connection to the ISP server system 4 in the conventional manner and the ISP server system 4 dynamically allocates and transmits an IP address to the second home system 2, where it is stored.

When the PPP daemon 17 has established the PPP connection, it spawns the IP address reporting client process 18. The IP address reporting client process 18 attempts to connect to the TCP/IP port on the web server system 5 associated with the IP address reporting server process 55. Once the connection is established, there is an exchange of messages in which the second home system 2 and the web server system 5 confirm their identities to each other and the IP address reporting client process 18 sends the IP address, allocated to the second home system 2 by the ISP server system 4, to the IP address reporting server process 55. The connection is then closed.

When the IP address reporting server process 55 has received an IP address, as described above, it finds the entry in the IP table 54 which relates to an associated with the home system 1, 2 that supplied the IP address. When the entry is found, it is updated with the newly received IP address.

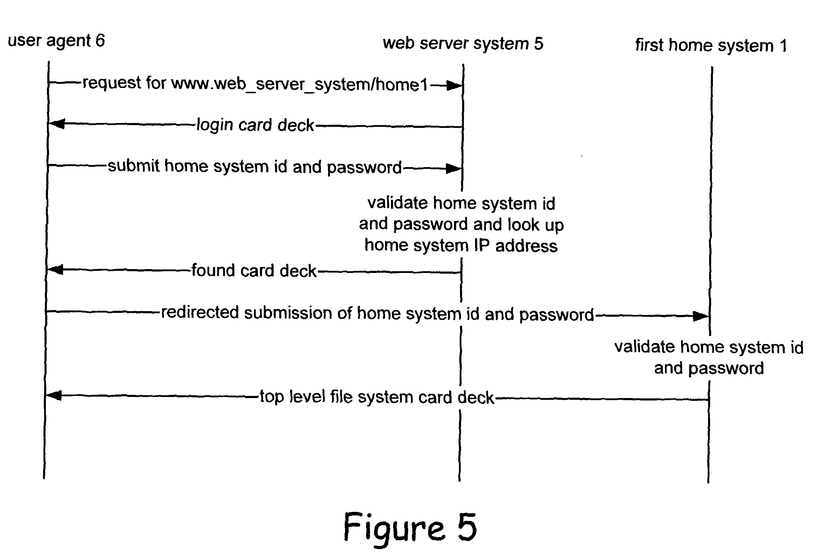

Referring to Figure 5, if the user of the WAP user agent 6 wishes to have access to the file system 11 of the first home system 1, for example, the user activates the user agent's microbrowser and enters a URI pointing to the web server system 5 of the form "http:// www.web_server_system.com/home1" where "home1" is the id of the first home system 1 used in the IP table 54. An alternative would be to use a subnet URI of the form "http://home1.web_server_system.com".

When the web server 51 receives the request for the "home1" document, the web server returns an login WML card deck which includes a form having home system id and password text fields. The user enters the home system id and password into the text fields and submits the form to the web server 51.

The web server validates the home system id and password pair and, assuming that it is valid, sends an HTTP 302 "found" message to the microbrowser. This message includes the URI of a login script 13 of the WAP server 12 of first home system 1. This causes the microbrowser to submit the home system id and password to the WAP server 12 of the first home system 1 which then uses the login script to check the home system id and password pair.

In the following, the WAP server 12 dynamically generates decks of cards containing hyperlinks. These URIs in these hyperlinks are themselves generated dynamically using the IP address allocated to the home system 1 by the ISP server system 4. Consequently, subsequent requests sent by the user agent 6 to the WAP server 12 do not require DNS name lookup or redirections from the web server system 5.

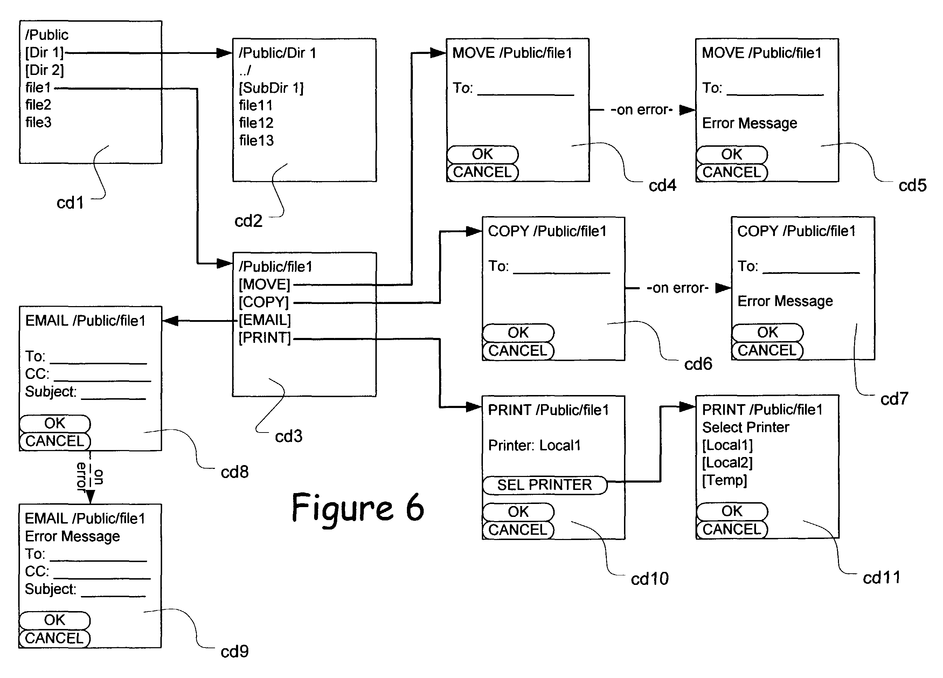

Referring to Figure 6, if the home system id and password pair is valid, the login script 13 generates a top level file system card deck cd1 and sends it to the user agent 6. The file system card decks cd1, cd2 comprise a header identifying the current directory, a link to the parent directory, if there is one, a list of links to subdirectories and a list of files in the current directory.

If a user "clicks" on one of the links to a subdirectory, the user agent 6 sends a request for a file system card deck with the absolute path of the subdirectory as a parameter to the WAP server 12. This request is processed by a CGI script 13 which generates a further file system card deck cd2 which is sent to the user agent 6.

If a user "clicks" on one of the files listed in a file system card deck cd1, cd2, the user agent 6 sends a request for a file manipulation card deck cd3 with the file's name and its absolute path as parameters. This request is processed by a CGI script 13 which generates the file manipulation card deck cd3. The file manipulation card deck cd3 has a heading identifying the file and a list of manipulation options including move, copy, email and print.

If a user "clicks" on the move option in the file manipulation card deck cd3, the user agent 6 sends a request for a move card deck cd4 with the name and absolute path of the current file as parameters. This request is processed by a CGI script 13 which generates the move card deck cd4. The move card deck cd4 has a header identifying the function and the file being manipulated, a text field so that the user can enter a destination and OK and CANCEL buttons.

If the user "clicks" on the CANCEL button, a request for the file manipulation card deck cd3 is sent to the WAP server 12 with the file's name and absolute path as parameters. This request is handled by the WAP server 12 as described above.

If the user "clicks" on the OK button, a request identifying a file move CGI script 13 is sent to the WAP server 12 with the file's name and absolute path and the destination (filename and/or absolute path), taken from the text field, as parameters. This request is processed by the file move CGI script 13 which first checks that the destination is valid. If the destination is not valid, e.g. a specified directory does not exist, the CGI script 13 generates a modified file move card deck cd5 which is similar to the ordinary file move card deck cd4 but includes an error message. The OK and CANCEL buttons of the modified file move card deck cd5 have the same effect as those of the ordinary file move card deck cd4.

If the destination is valid, the CGI script 13 moves the file to the entered destination and generates the file system card deck cd1, cd2 for the directory in which the file was originally located. The file may still be there if the move function has been used to rename the file.

Returning now to the file manipulation card deck cd3, if a user "clicks" on the copy option in the file manipulation card deck cd3, the user agent 6 sends a request for a copy card deck cd6 with the name and absolute path of the current file as parameters. This request is processed by a CGI script 13 which generates the copy card deck cd6. The copy card deck cd6 has a header identifying the function and the file being manipulated, a text field so that the user can enter a destination and OK and CANCEL buttons.

If the user "clicks" on the CANCEL button, a request for the file manipulation card deck cd3 is sent to the WAP server 12 with the file's name and absolute path as parameters. This request is handled by the WAP server 12 as described above.

If the user "clicks" on the OK button, a request identifying a file copy CGI script 13 is sent to the WAP server 12 with the file's name and absolute path and the destination (filename and/or absolute path), taken from the text field, as parameters. This request is processed by the file copy CGI script 13 which first checks that the destination is valid. If the destination is not valid, e.g. a specified directory does not exist, the CGI script 13 generates a modified file copy card deck cd7 which is similar to the ordinary file copy card deck cd6 but includes an error message. The OK and CANCEL buttons of the modified file copy card deck cd7 have the same effect as those of the ordinary file copy card deck cd6.

If the destination is valid, the CGI script 13 copies the file to the destination and generates the file system card deck cd1, cd2 for the directory in which the source file is located.

Returning again to the file manipulation card deck cd3, if a user "clicks" on the email option in the file manipulation card deck cd3, the user agent 6 sends a request for an email card deck cd8 with the name and absolute path of the current file as parameters. This request is processed by a CGI script 13 which generates the email card deck cd8. The email card deck cd8 has a header identifying the function and the file being manipulated, "To", "CC" and "Subject" text fields and OK and CANCEL buttons.

If the user "clicks" on the CANCEL button, a request for the file manipulation card deck cd3 is sent to the WAP server 12 with the file's name and absolute path as parameters. This request is handled by the WAP server 12 as described above.

If the user "clicks" on the OK button, a request identifying an email CGI script 13 is sent to the WAP server 12 with the file's name and absolute path and the contents of the text fields as parameters. This request is processed by the email CGI script 13 which first checks that the "To" parameter is of the correct form and that any "CC" parameter is of the correct form. If these checks reveal an improper parameter value, e.g. lack of an @ or a domain, the email CGI script 13 generates a modified email card deck cd9 which is similar to the ordinary email card deck cd8 but includes an error message. The OK and CANCEL buttons of the modified email card deck cd9 have the same effect as those of the ordinary email card deck cd8.

If the "To" and "CC" parameter pass the checks, the email CGI script 13 generates an email with the selected file as an attachment and sends the email to the entered To and CC addresses. After generating the email, the email CGI script 13 generates the file system card deck cd1, cd2 for directory in which the sent file is located.

The print function accessible from the file manipulation card deck cd3 can be used to print files at the home system 1 or at the remote system 3. However, in order to be able to print at the remote system 3, the home system 1 must be made aware of the printer 10 at the remote system 3.

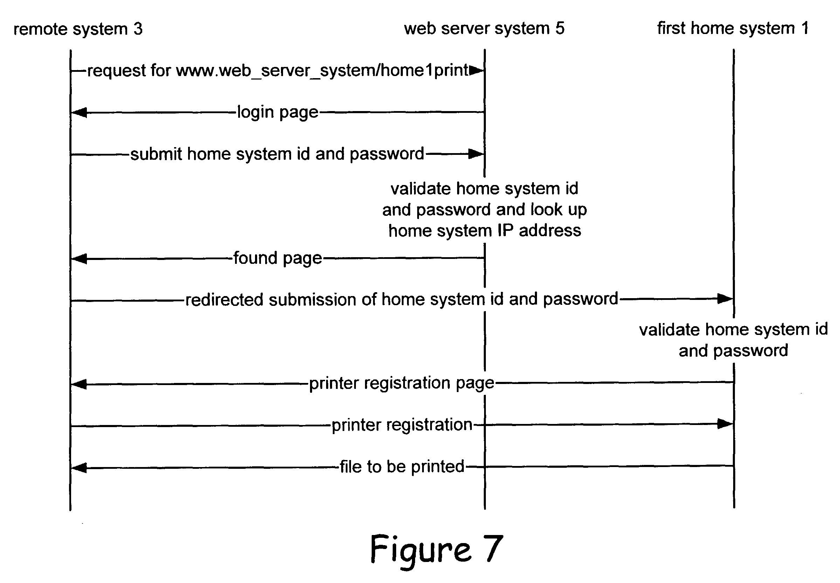

Referring to Figure 7, if the user of the remote system 3 wishes to register the printer 4 with the first home system 1, the user activates the remote system's web browser and enters a URI pointing to the web server system 5 of the form "HTTP:// www.web_server_system/home1print" where "home1" is the id of the first home system 1 used in the IP table 54.

When the web server 51 receives the request for the "home1print" document, the web server returns an login HTML page which includes a form having home system id and password text fields. The user enters the home system id and password into the text fields and submits the form to the web server 51.

The web server validates the home system id and password pair and, assuming that it is valid, sends an HTTP 302 "found" message to the web browser. This message includes the URI of a print registration login script 13 of the WAP server 12 of the first home system 1. This causes the web browser to submit the home system id and password to the WAP server 12 of the first home system 1 which then uses the login script to check the home system id and password pair.

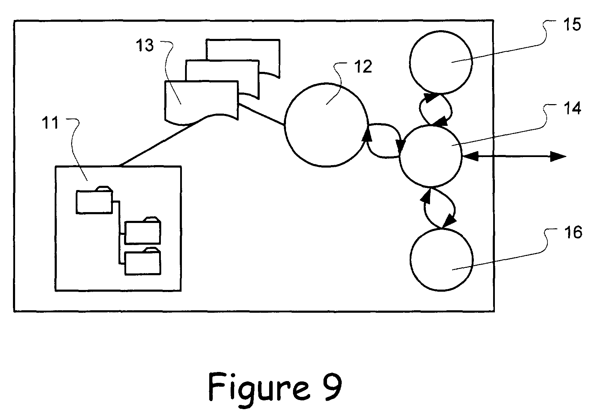

If the id and password pair is valid, the WAP server 12 send a printer registration page to the remote system 3 where it is displayed by the web browser there. The printer registration page includes a signed Java applet (Figure 8) with a drop-down list 70 of printers 10 available to the remote system 3, a text box 71 for receiving a printer id for the printer 10 displayed in the drop-down list 70 and a register button 72.

The user selects a printer 10 using the drop-down list 70, types an id for the selected printer 10, in this example "temp", into the text box 71 and then "clicks" on the register button 72. The applet responds by connecting to the printer id receiving process 19 via a TCP/IP port at the home system 1 and then sending the printer id. The printer id receiving process 19 stores the printer id so that it is accessible to a first printer select CGI script 13.

Returning now to the description of the print function made available to the user agent 6, if a user "clicks" on the print option in the file manipulation card deck cd3, the user agent 6 sends a request for a print card deck cd10 with the name and absolute path of the current file as parameters. This request is processed by a CGI script 13 which generates the print card deck cd10. The print card deck cd10 has a header identifying the function and the file being manipulated, the name of the currently selected printer, initially the home system's default printer, and Select Printer, OK and CANCEL buttons.

If the user "clicks" on the CANCEL button, a request for the file manipulation card deck cd3 is sent to the WAP server 12 with the file's name and absolute path as parameters. This request is handled by the WAP server 12 as described above.

If the user "clicks" on the OK button with a local printer displayed, a request identifying a printing CGI script 13 is sent to the WAP server 12 with the file's name and absolute path and the printer name as parameters. This request is processed by the printing CGI script 13 which prints out the specified file, using the appropriate application. After initiating the printing of the file, the printing CGI script 13 generates the file system card deck cd1, cd2 for directory in which the printed file is located.

If the user "clicks" on the Select Printer button, a request identifying the first printer select CGI script 13 is sent to the WAP server 12 with the file's name and absolute path as parameters. This request is processed by the first printer select CGI script 13 which generates the a printer select card deck sd11. The printer select card deck sd11 has a header identifying the function and the currently selected file, a list of available printers, OK and CANCEL buttons and the name of the currently selected printer in hidden form. The list of available printers comprises the locally available printers and the printer 10 at the remote system 3, which was identified to the home system 1 as "temp" using the applet at the remote system 3.

The user can select a printer and when the OK button is "clicked", the user agent 6 sends a request identifying a second printer select CGI script 13 with the identified file's name and absolute path and the selected printer as parameters. Clicking on the CANCEL button causes a similar request to be sent but with the selected printer parameter filed with the hidden printer name.

The second printer select CGI script 13 generates the printing card deck sd10 with the newly selected printer identified, in the case of the user "clicking" the OK button on the printer select card deck sd11, and the default printer in the case of the user "clicking" on the CANCEL button.

If the user has selected a remote printer, in this example "temp" at the remote system 3, the printing CGI process 13 instructs the file transfer process 20 to transfer the selected file to the applet via a TCP/IP port at the remote system 3 which monitored by the applet. After instructing the file transfer process 20 to send the file, the printing CGI script 13 generates the file system card deck cd1, cd2 for directory in which the dispatched file is located.

When the file is received by the applet, it is stored on the remote system's hard drive. The applet then causes the file to be printed by connecting to the COM interface of the appropriate application, e.g. word processor, spreadsheet etc., and instructing the application to load and print the file. When the file has been printed, the applet deletes it.

The user of the user agent 6 can manipulate files on the second home system 2 in a similar manner.

The files system as it is presented by the WAP server 12 may be a virtual file system defined by the code of the CGI scripts. In a simple form, the root directory presented by the WAP server 12 may be a subdirectory of the actual file system of the home system. Furthermore, subdirectory-parent relationships as presented by the WAP server 12 need not actually reflect the structure of the actual file system of the home system. This provides a level of access control that is not inherent in Microsoft Windows desktop operating systems where anyone with direct access to the file system has complete control over the files in it.

Referring to Figure 9, in another embodiment, the printer id receiving process of a home system is implemented using the WAP server 12 and a suitable CGI script 13 and the applet sends the printer id in the form of an http request to the WAP server 12. The document to be printed is then sent by the WAP server 12, in response to signals from the user-agent 6, spoofing a response to the printer id http request from the applet at the remote system 3. In this example, the time out for http requests used by the applet will need to be much longer than is the case with conventional http clients such as web browsers to allow for the delay between sending of the printer id and the user of the user agent 6 issuing the print command.

Regarding the utility of the remote printing function, it can be envisioned that the user of the user agent 6 is a salesperson visiting a prospect at the site of the remote system 3. The remote printing function gives the salesperson the ability to print out, for example, sales literature for the prospect using the prospect's own computer 3 and printer 4 without effecting any permanent changes thereto.

It will be appreciated that the present invention may be embodied in other ways. For instance, the CGI scripts 13, which may be compiled or interpreted programs, could be replaced with some other server-side technology such as Java Server Pages, Active Server Pages or PHP: Hypertext Preprocessor. The Java applet could be replaced with an ActiveX control and an ActiveX control on a portal web page could be used to report the allocated IP address of a home station to the web server.

## Claims

1. A method of delivering an electronic document, the method comprising:-
receiving a document identification signal from a remote client at a stateless server process of a server;
receiving a document destination signal from the remote client at the server process;
receiving a document dispatch command signal from the remote client at the server process;
dispatching the document, identified by the document identification signal, from the server to the destination, identified by the document destination signal, in response to reception of the document dispatch command signal,
wherein the destination is neither said server nor said remote client.

2. A method according to claim 1, wherein said signals comprise HTTP requests.

3. A method according to claim 2, wherein said requests are received from a channel using, at least in part, WSP/B.

4. A method according to claim 2 or 3, wherein the document identification signal comprises an HTTP request identifying a CGI program.

5. A method according to claim 4, including running said CGI program to generate a hypermedia document including a form to enable a recipient to select from a plurality of file handling processes.

6. A method according to claim 5, wherein said file handling processes include printing and/or emailing.

7. A method according to claim 2 or 3, wherein the destination identification signal comprises an HTTP request identifying a CGI program.

8. A method according to claim 7, wherein the destination identification signal also serves as said document dispatch command signal.

9. A method according to claim 8, comprising running said CGI program to send an email to the destination, identified by said destination identification signal, with said electronic document as an attachment.

10. A method according to claim 7, including receiving a printer id from said destination and generating, at said server, a hypermedia document, including a list of printers which contains said id, and dispatching said document to the destination.

11. A method according to claim 10, wherein said destination identification signal comprises an HTTP request identifying a CGI program corresponding to a hyperlink in said hypermedia document.

12. A method according to claim 10 or 11, comprising:
receiving a request for a hypermedia document from the destination at the server process, said document having an applet embedded therein; and
serving said hypermedia to the destination,
wherein the applet comprises computer instructions for enabling a computer, on which the applet is running, to send said printer id to the server, receive said electronic document and print out said document using a printer identified to the server by said id.

13. An apparatus configured to perform a method according to any preceding claim.

14. A method of establishing HTTP communication between a first apparatus and a second apparatus, wherein the second apparatus is dynamically allocated its IP address, the method comprising:-
receiving notification of the IP address of the second device at a third apparatus;
storing the notified IP address in association with an id indicative of the second apparatus at the third apparatus;
receiving an HTTP request from an HTTP client at the first apparatus at the third apparatus, the HTTP request including a URI containing an element indicative of the second apparatus; and
responding to said request in dependence on said element to obtain the stored IP address of the second apparatus and send a response, including said IP address, to the first apparatus, said response being configured to cause said HTTP client to send a request to the second apparatus without performing a DNS lookup.

15. A method according to claim 14, wherein said response is a 301 or 302 response as defined in RFC 1945 or RFC 2616.

16. An apparatus configured to perform a method according to claim 14 or 15.

17. A method comprising performing a method according to claim 14 or 15 followed by a method according to any one of claims 1 to 12, wherein said first apparatus is said remote client and said second apparatus is said server.
